# EUROPÄISCHE PATENTSCHRIFT

(11) **EP 3 511 201 B1**
(45) Veröffentlichungstag und Bekanntmachung des Hinweises auf die Patenterteilung: **09.02.2022**
(21) Anmeldenummer: 19155749.5
(22) Anmeldetag: 11.12.2017
(51) Int. Cl.: B60N 2/18, B60N 2/07, B60N 2/06, B60N 2/015

(54) **VERSTELLEINRICHTUNG FÜR DIE LÄNGSVERSTELLUNG EINES FAHRZEUGSITZES**
ADJUSTMENT DEVICE FOR ADJUSTING THE LONGITUDINAL POSITION OF A VEHICLE SEAT
DISPOSITIF DE RÉGLAGE DESTINÉ AU RÉGLAGE LONGITIDUNAL D'UN SIÈGE DE VÉHICULE

(30) Priorität: 14.12.2016 DE 102016225053
(43) Veröffentlichungstag der Anmeldung: 17.07.2019
(62) Teilanmeldung aus: 17811585.3
(73) Patentinhaber: Brose Fahrzeugteile SE & Co. Kommanditgesellschaft, Coburg, 96450 Coburg (DE)
(72) Erfinder: GROPP, Jörg, 98701 Böhlen (DE); AMSTEIN, Marcel, 98530 Marisfeld (DE); HOFMANN, Jochen, 96257 Marktgraitz (DE); KRÖNER, Gregor, 96120 Bischberg (DE); KIESER, Sandra, 96450 Coburg (DE); REHMET, Fabian, 96317 Kronach (DE)
(74) Vertreter: Maikowski & Ninnemann Patentanwälte Partnerschaft mbB

(56) Entgegenhaltungen:
- WO-A1-00/41911
- DE-A1- 19 815 283
- US-A1- 2008 231 090
- US-A1- 2012 145 867

## Beschreibung

Die Erfindung betrifft einen Fahrzeugsitz mit einer Verstelleinrichtung für die Längsverstellung des Fahrzeugsitzes.

Eine in der Praxis übliche Verstelleinrichtung weist unter anderem eine erste, zur Befestigung an einem Fahrzeugboden vorgesehene Schiene und eine zweite, zur Verbindung mit einem Sitzuntergestell des Fahrzeugsitzes vorgesehene Schiene auf. Die zweite Schiene ist hierbei relativ zu der ersten Schiene verstellbar gelagert, um eine Längsverstellung des Fahrzeugsitzes entlang einer Sitzlängsrichtung zu ermöglichen. Üblicherweise weist ein Fahrzeugsitz zwei Paare von ersten und zweiten Schienen auf, über die der Fahrzeugsitz am Fahrzeugboden längsverschieblich angeordnet ist. Zur Verstellung der zweiten Schiene relativ zu der ersten Schiene weist die Verstelleinrichtung regelmäßig eine (Verstell-) Spindel und eine mit der Spindel kämmende Spindelmutter auf.

Bei Verwendung einer starren zweiten Schiene, an der das Sitzuntergestell festgelegt wird, ist über die Verstelleinrichtung ausschließlich eine Längsverstellung des Fahrzeugsitzes möglich. Zusätzliche Verstellmöglichkeiten können hierbei dann nur über an dem Sitzuntergestell verstellbar gelagerte Komponenten abgebildet werden. In dieser Hinsicht bekannte Verstelleinrichtungen offenbaren beispielsweise die US 2008/231090, die einen gattungsgemäßen Fahrzeugsitz offenbart, die DE 198 15 283 A1 und die WO 2005/015054 A1. Die hier jeweils vorgesehenen Spindelantriebe mit Spindel und hiermit kämmender Spindelmutter weisen üblicherweise einen gemeinsamen, zum Beispiel elektromotorischen, Antrieb auf, um jeweils einer Sitzlängsseite zugeordnete gestellfeste (zweite) Schienen synchron relativ zu einem Paar bodenfester (erster) Schiene fremdkraftbetätigt zu verstellen. Vergleichbare Verstelleinrichtungen sind ferner aus der US 2012/145867 A1 und der WO 00/41911 A1 bekannt.

Bei den aus dem Stand der Technik bekannten Verstelleinrichtungen mit Spindelantrieb ist zudem die Montage teilweise äußerst komplex und damit eine Wartung oder Reparatur kaum möglich. Auch sind einige Verstelleinrichtungen mit Spindelantrieb vergleichsweise anfällig für Verunreinigungen und Beschädigungen im Bereich der Enden der verwendeten Schiene(n).

Ausgehend von dem vorstehend genannten Stand der Technik liegt der gegenständlichen Lösung die Aufgabe zugrunde, eine verbessere Verstelleinrichtung für die Längsverstellung bereitzustellen, die zum Beispiel zusätzliche Verstellmöglichkeiten für den Fahrzeugsitz bietet und/oder die eine Verbesserung im Hinblick auf Beständigkeit und Montierbarkeit darstellt.

Diese Aufgabe wird mit einem Fahrzeugsitz des Anspruchs 1 gelöst.

Es ist ein Fahrzeugsitz mit einer Verstelleinrichtung für die Längserstellung des Fahrzeugsitzes vorgeschlagen, die unter anderem mindestens eine Schiene aufweist, die zur Vorgabe einer Sitzlängsachse, entlang der ein Sitzuntergestell des Fahrzeugsitzes verstellbar ist, sowie zur Lagerung mindestens einer Verstelleinheit der Verstelleinrichtung vorgesehen ist. Die Verstelleinrichtung umfasst mindestens eine verschieblich geführte Verstelleinheit, an der das Sitzuntergestell - zum Beispiel über eine Schwinge - festzulegen ist, um entlang der Sitzlängsachse verstellbar zu sein. Die Verstelleinheit ist mittels einer Spindel und einer hiermit kämmenden Spindelmutter entlang der Sitzlängsachse verstellbar, wobei die Verstelleinrichtung ein Spindelhalteteil umfasst, das an der Schiene festgelegt ist und an dem ein Abschnitt der Spindel gehalten ist. Ferner ist die mindestens eine Verstelleinheit über mindestens zwei Stützelemente an der mindestens einen Schiene verschieblich gelagert, wobei sich die Spindel an den mindestens zwei Stützelementen abstützt und sich zwischen den mindestens zwei Stützelementen hindurch erstreckt

In einer Ausführungsvariante sind die mindestens zwei Verstelleinheiten entlang der Sitzlängsachse relativ zueinander verstellbar und jeder Verstelleinheit ist ein eigener Antrieb zur fremdkraftbetätigten Verstellung entlang der Sitzlängsachse zugeordnet.

In einer Weiterbildung sind somit mindestens zwei Verstelleinheiten einer der zwei Sitzlängsseiten zugeordnet, hierbei aber nicht starr miteinander gekoppelt, sondern entlang der Sitzlängsachse fremdkraftbetätigt relativ zueinander verstellbar. Hierfür ist jeder Verstelleinheit ein eigener Antrieb zugeordnet, sodass durch Ansteuerung der unterschiedlichen Antriebe - und damit nicht durch mechanische Entkopplung der beiden Verstelleinheiten - ein Abstand der beiden Verstelleinheiten entlang der Sitzlängsachse variiert werden kann. Auf diese Art und Weise kann über die Verstelleinrichtung mindestens eine zusätzliche Verstellmöglichkeit für den Fahrzeugsitz und insbesondere dessen Sitzuntergestell bereitgestellt werden, ohne dass hierfür zusätzliche Bauteile vorgesehen werden müssten. Vielmehr ist bereits über die relativ zueinander und an der rechten oder linken Sitzlängsseite vorgesehenen Verstelleinheiten der Fahrzeugsitz nicht nur längsverstellbar, sondern auch zusätzlich in seiner Orientierung bezüglich des Fahrzeugbodens einstellbar.

Die Verstelleinheit kann ein Lagerteil für die Verbindung mit einer Schwinge des Sitzuntergestells aufweisen. Eine solche Schwinge ist dann beispielsweise an dem Lagerteil der Verstelleinheit angelenkt wie auch an einer Komponente des Sitzuntergestells, um über die relativ zueinander entlang der Sitzlängsachse verstellbaren Verstelleinheiten eine Neigungseinstellung des Sitzuntergestells zu ermöglichen.

Für die fremdkraftbetätigte Verstellung der mindestens einen Verstelleinheit ist eine Spindel und eine hiermit kämmende Spindelmutter vorgesehen sein. Für die Verstellung der mindestens einen Verstelleinheit ist somit ein Spindelantrieb vorgesehen, bei dem sich die (Verstell-) Spindel üblicherweise entlang der Sitzlängsachse erstreckt.

Bei mindestens zwei Verstelleinheiten, die entlang der Sitzlängsachse relativ zueinander verstellbar sind, kann jeder einzelnen mit jeweils einem eigenen, vorzugsweise elektromotorischen Antrieb versehenen Verstelleinheit in einer Ausführungsvariante jeweils auch ein eigener Spindelantrieb mit jeweils einer Spindel und einer der jeweiligen Verstelleinheit zugehörigen Spindelmutter zugeordnet sein. Um möglichst wenige unterschiedliche Komponenten zu verwenden und um die Montage der Verstelleinrichtung zu vereinfachen, ist in einer Ausführungsvariante für die fremdkraftbetätigte Verstellung der mindestens zwei Verstelleinheiten eine gemeinsame, feststehende Spindel vorgesehen, mit der zwei, jeweils einer Verstelleinheit zugeordnete Spindelmuttern kämmen. Durch die Verwendung einer einzelnen (schienenfesten) Spindel, entlang der die mindestens zwei Verstelleinheiten mittels ihrer jeweils zugeordneten drehbaren Spindelmutter verstellbar sind, ist im Übrigen auch ein möglichst großer Verstellweg entlang der Sitzlängsachse einfach darstellbar, indem beide Verstelleinheiten über nahezu die gesamte Länge der einzelnen Spindel gemeinsam oder relativ zueinander verstellt werden können.

In einer Ausführungsvariante verläuft eine Längsachse der Spindel im Wesentlichen senkrecht zu einer Antriebsachse des Antriebs einer Verstelleinheit. Dies schließt insbesondere ein, dass eine Antriebswelle eines elektromotorischen Antriebs im Wesentlichen senkrecht zu der Längsachse der Spindel verläuft, mit der eine von dem Antrieb zu einer Drehung angetriebene Spindelmutter kämmt. Die Übertragung eines von dem Antrieb bereitgestellten Antriebsmoments für die Verstellung der jeweiligen Verstelleinheit erfolgt hierbei folglich über ein entsprechend ausgestaltetes und die Spindelmutter aufweisendes Verstellgetriebe.

Für die Steuerung der Verstellbewegungen von mindestens zwei Verstelleinheiten relativ zueinander, kann eine (einzelne) elektronische Steuereinheit, zum Beispiel in Form eines an dem Sitzuntergestell anzuordnenden Steuergeräts, vorgesehen sein. Eine solche elektronische Steuereinheit ist dann beispielsweise eingerichtet, für eine Veränderung eine Neigung und/oder einer Höhe des Sitzuntergestells und/oder eines hieran angeordneten Polsterregens einen Abstand der mindestens zwei hintereinander angeordneten Verstelleinheiten relativ zueinander entlang der Sitzlängsachse zu variieren. Über die elektronische Steuereinheit kann somit beispielsweise jeder Antrieb der Verstelleinheiten unabhängig angesteuert werden, um die Verstelleinheiten aufeinander zu oder voneinander weg entlang der Sitzlängsachse zu verstellen. Dies schließt insbesondere ein, dass die elektronische Steuereinheit eingerichtet ist, lediglich einen der Antriebe der unterschiedlichen, entlang der Sitzlängsachse hintereinander angeordneten Verstelleinheiten anzusteuern, sodass die zugehörige Verstelleinheit relativ zu mindestens einer feststehenden Verstelleinheit der Verstelleinrichtung entlang der Sitzlängsachse verstellt wird. Eine solche Verstellung kann beispielsweise für die Einstellung einer Neigung der Sitzfläche des Fahrzeugsitzes unter Beibehaltung der eingestellten Sitzlängsposition vorgesehen sein.

Mindestens zwei Verstelleinheiten sind in einer Ausführungsvariante an ein und derselben Schiene verschieblich gelagert. Insbesondere in dieser Variante bietet sich dann auch die Verwendung einer einzelnen durchgängigen und an dieser Schiene festgelegten Spindel für die mindestens zwei Verstelleinheiten an. Grundsätzlich können aber auch in einer alternativen Ausführungsvariante die mindestens zwei Verstelleinheiten an unterschiedlichen Schienen verschieblich gelagert sein.

Erfindungsgemäß ist die mindestens eine Verstelleinheit der Verstelleinrichtung über mindestens zwei Stützelemente an der mindestens einen Schiene verschieblich gelagert. Die Verstelleinheit weist somit mit den Stützelementen zusätzliche Komponenten auf, die die verschiebliche Lagerung an der mindestens einen Schiene sicherstellen. Ein Stützelement kann hierbei jeweils zum Beispiel gleitend an der Schiene anliegen und damit nach Art eines Gleiters ausgebildet sein und an der Schiene entlang verschieblich ist. Alternativ oder ergänzend können die mindestens zwei Stützelemente jeweils drehbar gelagert sein und für ein Verschieben der Verstelleinheit entlang der Sitzlängsachse eine Drehbewegung ausführen. Solche Stützelemente weisen damit beispielsweise jeweils eine Rolle oder Walze auf, die durch Abrollen an der Schiene oder eine hiermit verbundene Komponenten ein Verschieben der Verstelleinheit entlang der Sitzlängsachse gestattet, wenn die Verstelleinheit hierzu von dem Antrieb angetrieben wird.

Die mindestens zwei Stützelemente können grundsätzlich an der Schiene oder einer hiermit verbundenen Komponente abgestützt sein, um der Verstelleinheit eine definierte Lage an der Schiene vorzugeben und eine klapperfreie Verstellung der Verstelleinheit entlang der Schiene zu unterstützen.

In einer möglichen Weiterbildung stützt sich eines der mindestens zwei Stützelemente an einem konvex gewölbten Führungsprofil ab, das einstückig mit der Schiene ausgebildet ist oder das als separate Komponente ausgebildet und mit der Schiene verbunden ist. Ein entsprechendes Führungsprofil kann beispielsweise oberhalb oder unterhalb der Spindel verlaufend angeordnet sein. In einer hierauf basierenden Variante sind beispielsweise zwei vergleichbar oder identisch ausgebildete Führungsprofile an der Schiene vorgesehen, um eine Abstützung eines Stützelements oder mehrerer (mindestens zweier) Stützelemente in unterschiedlichen Richtungen zu ermöglichen. Beispielsweise sind in einer Ausführungsvariante ein erstes, sich unterhalb einer Spindel erstreckendes Führungsprofil sowie ein zweites, sich oberhalb der Spindel und damit gegenüberliegend zu dem ersten Führungsprofil erschreckendes Führungsprofil an der Schiene vorgesehen. Anstelle von derart bezüglich einer Längsachse der Spindel um 180° zueinander versetzten Führungsprofilen können auch alternativ zueinander versetzte Führungsprofile an der Schiene vorgesehen sein, zum Beispiel um 90° zueinander versetzte Führungsprofile.

Insbesondere bei einer relativ langen Spindel für die Verstellung einer Verstelleinheit oder mehrerer Verstelleinheiten kann es vorteilhaft sein, wenn sich die Spindel, wie erfindungsgemäß vorgesehen, an mindestens zwei Stützelementen einer Verstelleinheit abstützt. Liegt beispielsweise eine Verstelleinheit stets zwischen zwei Spindelenden der Spindel vor, die über einen Spindelhalter an der Schiene festgelegt sind, kann über eine Verstelleinheit mit zwei die Spindel abstützenden Stützelementen eine unerwünschte Durchbiegung der Spindel verhindert oder zumindest erheblich reduziert sein. Beispielsweise ist in einer Ausführungsvariante derart ohne Weiteres die Verwendung einer Spindel möglich, die mehr als 1 m lang ist und die eine Verstellung eines Fahrzeugsitzes zwischen der ersten und zweiten Sitzreihe des Fahrzeugs ermöglicht, ohne dass hierbei zur Vermeidung einer unerwünschten Durchbiegung der Spindel zusätzlich Abstützstellen entlang der Spindelachse vorgesehen werden müssten. Hier kann vielmehr eine ausreichende Abstützung quer zur Längsachse der Spindel über die mindestens zwei Stützelemente der entlang der Spindel verstellbaren Verstelleinheit erreicht werden. In Anlehnung an die zuvor erläuterte Variante kann sich insbesondere hierbei ein Stützelement jeweils wiederum oberhalb und/oder unterhalb der Spindel an der Schiene oder einer hiermit verbundenen Komponente abstützen, um Querkräfte aus dem Sitzuntergestell in die Schiene und damit den Fahrzeugboden abzuführen, wenn der Fahrzeugsitz bestimmungsgemäß an der Verstelleinrichtung festgelegt ist.

Erfindungsgemäß erstreckt sich die zur Verstellung der einen Verstelleinheit oder mindestens zweier Verstelleinheiten vorgesehene Spindel zwischen mindestens zwei Stützelementen der Verstelleinheit hindurch. Über die mindestens zwei Stützelemente ist somit eine Abstützung der Spindel in unterschiedlichen Richtungen gegeben.

Beispielsweise sind mindestens zwei entlang der Sitzlängsachse hintereinander angeordnete Paare von je zwei Stützelementen an einer Verstelleinheit vorgesehen, sodass sich die Spindel zwischen diesen mindestens zwei Paaren hindurch erstreckt. Die Spindel ist somit an der Verstelleinheit an zwei entlang der Sitzlängsachse zueinander beabstandeten Bereichen in unterschiedlichen - vorzugsweise zueinander entgegengesetzten Raumrichtungen - über die Stützelemente an der Schiene abgestützt. Hierdurch wird nicht nur die Führung der jeweiligen Verstelleinheit an der Spindel entlang verbessert, sondern zusätzlich eine definierte Abstützung der Spindel an zwei zueinander beabstandeten Bereichen der Verstelleinheit erreicht.

In einer Ausführungsvariante ist zwischen den mindestens zwei Paaren von Stützelementen einer Verstelleinheit die mit der Spindel kämmende Spindelmutter drehbar gelagert. In dieser Variante sind folglich (bezogen auf die Sitzlängsachse) beidseitig der Spindelmutter einer Verstelleinheit zwei Paare von Stützelementen vorgesehen. Dabei ist über die Stützelemente die Verstelleinheit beidseitig der Spindelmutter an der Schiene oder einer hiermit verbundenen Komponente abgestützt. Ebenso kann sich die Spindel beiderseits der Spindelmutter über die Stützelemente an der Verstelleinheit (und hierüber an der Schiene oder einer hiermit verbundenen Komponente) abstützen.

Eine Spindelmutter der Verstelleinheit kann beispielsweise Teil eines Verstellgetriebes sein, das zumindest teilweise in einem Getriebegehäuse untergebracht ist und mit dem Antrieb der jeweiligen Verstelleinheit gekoppelt ist. Das Getriebegehäuse kann hierbei zumindest teilweise durch zwei sich quer zur Sitzlängsachse gegenüberliegende Lagerplatten gebildet sein, an denen mindestens ein drehbares Stützelement gelagert ist. In einer alternativen Ausführungsvariante ist das Getriebegehäuse an zwei sich gegenüberliegenden Lagerplatten fixiert, zum Beispiel mittels Schweißen, an denen mindestens ein drehbares Stützelement gelagert ist. Das jeweilige Getriebegehäuse wird somit im vorstehend zuerst genannten Fall insbesondere über die sich gegenüberliegenden Lagerplatten definiert, während im zuletzt genannten Fall das Getriebegehäuse separat herstellbar ist und anschließend bei der Montage der Verstelleinrichtung zwischen den zwei Lagerplatten aufgenommen wird. Das Getriebegehäuse kann grundsätzlich mit den Lagerplatten und dem einen oder mehreren Stützelementen (vollständig) in einem durch die mindestens eine Schiene definierten Hohlraum schützend aufgenommen sein.

Grundsätzlich kann (a) ein Ende der Schiene durch das Spindelhalteteil verschlossen und/oder (b) das Spindelhalteteil über mindestens ein separates Befestigungselement, wie zum Beispiel eine Schraube oder einen Bolzen, in der Schiene lösbar fixiert sein.

Hierbei ist zunächst unerheblich, ob die Verstelleinheit, die mittels der Spindel für die Einstellung einer Sitzlängsposition des Fahrzeugsitzes verstellbar ist, über einen eigenen Antrieb verfügt und gegebenenfalls zusätzlich zu einer weiteren, separaten Verstelleinheit mit separatem Antrieb vorgesehen ist.

Das Vorsehen eines Spindelhalteteils, über das zusätzlich ein Ende der Schiene verschlossen ist, bietet hierbei den zusätzlichen Vorteil die vorzugsweise bodenfeste Schiene an ihrem Ende zu versteifen, ohne hierfür ein zusätzliches Element vorsehen zu müssen. Diese Funktion übernimmt vielmehr das Spindelhalteteil, über das die vorzugsweise feststehende Spindel an der Schiene festgelegt ist. Über das Verschließen des Spindelendes mittels des Spindelhalteteils ist zudem das Risiko minimiert, dass Verunreinigungen in einen durch die Schiene definiertem Hohlraum gelangen, in der beispielsweise die Spindel angeordnet ist.

Die alternativ oder ergänzend vorgesehene lösbare Fixierung des Spindelhalteteils in der Schiene über das mindestens eine separate Befestigungselement erleichtert gegenüber bisher üblichen angeschweißten Spindelhaltern die Wartung und Reparatur der Verstelleinrichtung. Insbesondere in Kombination mit separat verstellbaren Verstelleinheiten mit je einem eigenen Antrieb gestattet ein lösbar fixiertes Spindelhalteteil auch ein vereinfachtes Montieren und Demontieren eines Verstellteils. Bei noch nicht montiertem Spindelhalteteil kann eine einzelne Verstelleinheit problemlos an der Schiene platziert oder von dieser entfernt werden. Im montierten Zustand begrenzt ein Spindelhalteteil dann mechanisch den zulässigen Verstellweg für eine Verstelleinheit und verhindert deren Entfernen von der Schiene.

Das Spindelhalteteil kann über mindestens eine Schrauben- oder Bolzenverbindung in der Schiene lösbar fixiert sein. In einer hierauf basierenden Variante können seitlich und damit quer zur Längsachse der Spindel eingeführte Schrauben oder Bolzen für die lösbare Fixierung des Spindelhalteteils in der Schiene vorgesehen sein. Hierdurch sind die Schrauben oder Bolzen leichter zugänglich.

Das Spindelhalteteil ist in einer Ausführungsvariante zwischen zwei - zum Beispiel platten- oder scheibenförmigen - Arretierelementen formschlüssig aufgenommen, die in einem Hohlraum der Schiene einander gegenüberliegend angeordnet sind. Über die Arretierelemente wird folglich das Spindelhalteteil, an dem ein Abschnitt der Spindel festgelegt ist, zusätzlich in einer definierten Lage in der Schiene gehalten. Die Fixierung über das mindestens eine separate Befestigungselement dient dann insbesondere der Sicherung eines Formflusses zwischen einem Arretierelement und dem Spindelhalteteil. Über den Formschluss zwischen einem Arretierelement und dem Spindelhalteteil kann insbesondere die Lage des Spindelhalteteils axial und/oder quer zur Längsachse der Spindel vorgegeben sein.

In einem Ausführungsbeispiel können hierbei die mindestens eine Schiene und mindestens eine Verstelleinheit der Verstelleinrichtung unterhalb eines Bodens des Fahrzeugs angeordnet sein, sodass die Verstellmechanik für das Sitzuntergestell in einem Bereich unterhalb des Bodens untergebracht und von außen nicht sichtbar ist. Der Boden weist dann vorzugsweise eine längserstreckte Aussparung, zum Beispiel in Form eines länglichen (Boden-) Schlitzes entlang der Sitzlängsachse auf. Aus der Aussparung steht dann z.B. lediglich ein Lagerteil der Verstelleinheit für die Verbindung des Sitzuntergestells mit der Verstelleinheit am Boden des Fahrzeugs hervor. Dieses Lagerteil stellt beispielsweise einen Anschraub- und/oder Gelenkpunkt für eine Schwinge des Sitzuntergestells bereit. Aus dem am Boden des Fahrzeugs hervorstehenden Lagerteil kann somit das Sitzuntergestell über eine Schwinge festgelegt werden. Die Schienen und die hieran verschieblich geführten Verstelleinheit(en) sind jedoch (abgesehen von dem Lagerteil) unterhalb des Bodens montiert.

In einer Ausführungsvariante ist der Fahrzeugsitz mittels der mindestens einen Verstelleinrichtung entlang der Sitzlängsachse zwischen einer Position in einer ersten Sitzreihe und einer Position in einer zweiten Sitzreihe des Fahrzeugs verstellbar. Die Verstelleinrichtung stellt somit beispielsweise eine ausreichend lange Schiene sowie gegebenenfalls eine ausreichend lange Spindel bereit, entlang der das Sitzuntergestell von vorne nach hinten und von hinten nach vorne verstellbar ist.

Der Fahrzeugsitz weist in einer Ausführungsvariante zwei Verstelleinrichtungen mit je mindestens zwei entlang der Sitzlängsachse hintereinander angeordneten Verstelleinheiten auf, denen jeweils ein eigener Antrieb zur fremdkraftbetätigten Verstellung zugeordnet ist. Über die zwei erfindungsgemäß entsprechend dem ersten Aspekt ausgestalteten Verstelleinrichtungen sind somit insgesamt mindestens vier Antriebe vorgesehen. Diese Antriebe sind dann paarweise und/oder einzeln ansteuerbar, um eine Neigung und/oder eine Höhe des Sitzuntergestells oder eines hieran angeordneten Polsterträgers relativ zu einem Boden eines Fahrzeugs mittels der zwei Verstelleinrichtungen einzustellen. Bei einem solchen Fahrzeugsitz ist folglich eine Neigung- und/oder Höheneinstellung des Sitzuntergestells ohne zusätzliche Komponenten allein über die unabhängig ansteuerbaren Verstelleinrichtungen erreicht, die entlang der Sitzlängsachse unabhängig voneinander verstellbar sind.

Dabei kann über die unterschiedlichen Verstelleinrichtungen beispielsweise eine Ausstiegsposition vorgegeben sein, bei der das Sitzuntergestell vergleichsweise stark nach vorne geneigt wird, um einem Sitzbenutzer einen Ausstieg aus dem Fahrzeug zu erleichtern. Alternativ oder ergänzend kann das Sitzuntergestell in eine Komfort- oder Relaxposition nach hinten geneigt werden, unter anderem indem zwei mit dem Sitzuntergestell verbundene (vordere) Verstelleinheiten relativ zu feststehenden (hinteren) Verstelleinheiten nach hinten verstellt werden. Die hinteren Verstelleinheiten sind hierbei jeweils entlang der Sitzlängsachse hinter den vorderen Verstelleinheiten einer Sitzlängsseite angeordnet. Werden die einzelnen Verstelleinheiten der unterschiedlichen Sitzlängsseiten synchron angesteuert, wird das Sitzuntergestell komplett ohne Neigungs- oder Höhenänderung entlang der Sitzlängsachse verfahren. Über eine einzelne Ansteuerung einzelner Verstelleinheiten kann ferner eine weitere Variation der Verstelllage des Sitzuntergestells erreicht werden. In jedem Fall ist über die Verwendung unabhängig voneinander ansteuerbarer Verstelleinheiten eine zusätzliche Flexibilisierung bei der Verstellung eines Sitzuntergestells erreicht.

Die beigefügten Figuren veranschaulichen exemplarisch mögliche Ausführungsvarianten der erfindungsgemäßen Lösung.

Hierbei zeigen:
- Figur 1: ausschnittsweise ein Ausführungsbeispiel einer Verstelleinrichtung für einen erfindungsgemäßen Fahrzeugsitz mit zwei an einer gemeinsamen Spindel verstellbar gehaltenen Verstelleinheiten mit je einem eigenen elektromotorischen Antrieb, an denen jeweils ein Sitzuntergestell festlegbar ist (ohne Darstellung einer Schiene der Verstelleinrichtung);
- Figur 2: die Verstelleinrichtung der Figur 1 mit Blick von der gegenüberliegenden Seite und mit Darstellung der Schiene der Verstelleinrichtung;
- Figur 3A: eine Vorderansicht der Verstelleinrichtung der Figuren 1 und 2 mit Blick auf ein verschraubtes Spindelhalteteil in Form einer Spindelhalteplatte;
- Figur 3B: eine Schnittansicht der Verstelleinrichtung der Figuren 1, 2 und 3A quer zur Längsachse der Spindel;
- Figur 4: einen Fahrzeugsitz mit zwei Verstelleinrichtungen gemäß den Figuren 1 bis 3B, die jeweils nahezu vollständig unter einem Boden eines Fahrzeugs untergebracht sind.

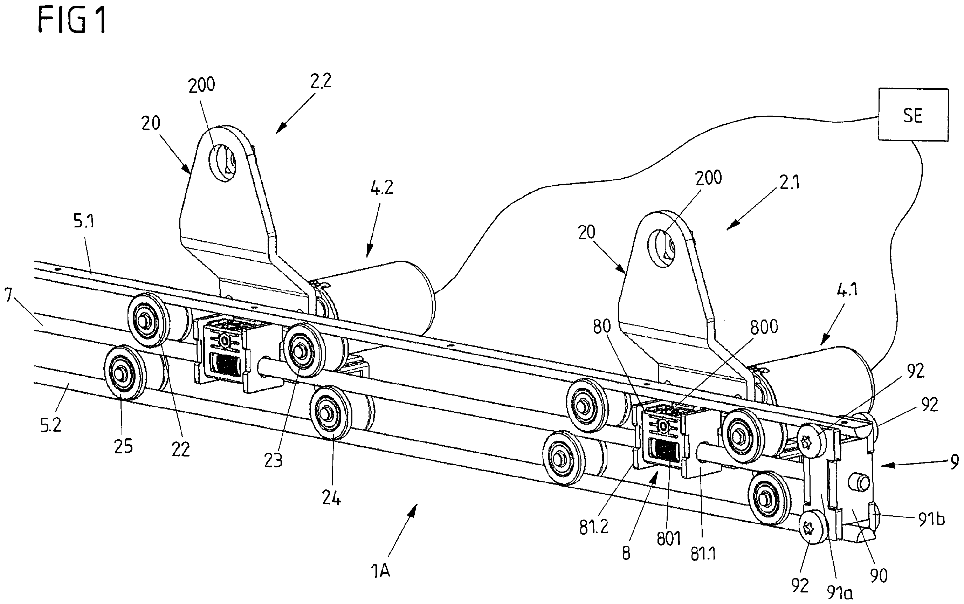

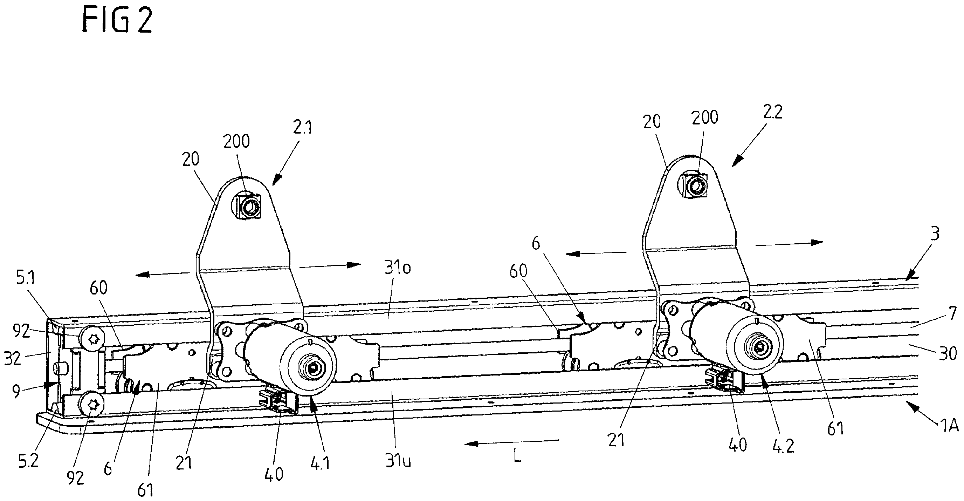

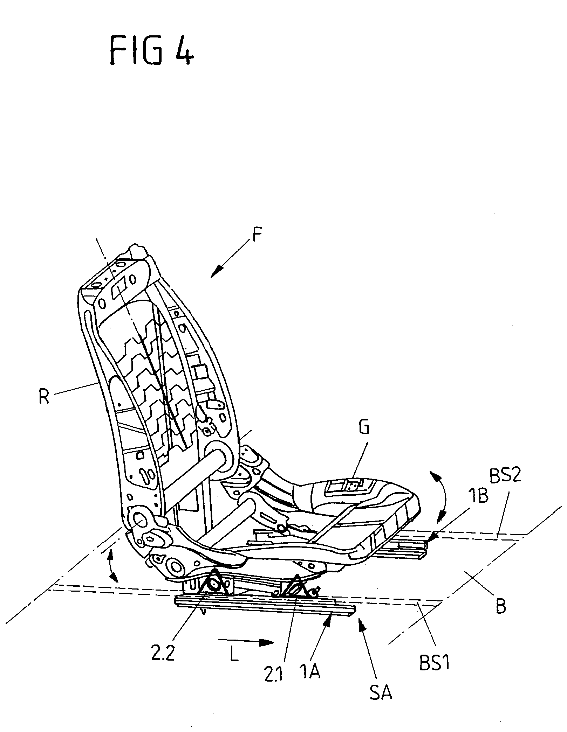

Die Figuren 1, 2, 3A und 3B zeigen exemplarisch ein Ausführungsbeispiel einer Verstelleinrichtung 1A. Die Verstelleinrichtung 1A ist Teil einer Schienenanordnung SA eines erfindungsgemäßen Fahrzeugsitzes F der Figur 4. Die Verstelleinrichtung 1A steht dabei exemplarisch für eine spiegelbildlich ausgebildete Verstelleinrichtung 1B der Schienenanordnung SA, die entsprechend der Figur 4 an der anderen (rechten) Sitzlängsseite des Fahrzeugsitzes F vorgesehen ist.

Der Fahrzeugsitz F weist ein Sitzuntergestell G und eine hieran verschwenkbar gelagerte Rückenlehne R auf. Über die Schienenanordnung SA ist das Sitzuntergestell G und damit der Fahrzeugsitz F entlang einer Sitzlängsachse L verschieblich und damit eine Sitzlängsposition des Fahrzeugsitzes F einstellbar. Die Anbindung des Sitzuntergestells G an die Verstelleinrichtungen 1A und 1B der Schienenanordnung SA erfolgt an Lagerteilen 20 (vgl. Figuren 1, 2, 3A und 3B). Diese Lagerteile 20 sind jeweils Teil einer als Schlitten 2.1 oder 2.2 ausgebildeten Verstelleinheit der jeweiligen (linken oder rechten) Verstelleinrichtung 1A oder 1B. Die einzelnen Schlitten 2.1, 2.2 der Verstelleinrichtungen 1A und 1B stehen dabei lediglich mit dem Lagerteil 20 von einem Boden B eines Fahrzeugs hervor, in dem der Fahrzeugsitz F bestimmungsgemäß montiert ist. Die übrigen Komponenten der Verstelleinrichtung 1A und 1B sind unterhalb des Bodens B untergebracht, sodass insbesondere eine (Einzel-) Schiene 3 einer Verstelleinrichtung 1A oder 1B, an der die Schlitten 2.1 und 2.2 verschieblich gelagert sind, unterhalb des Bodens B fixiert ist. Die Lagerteile 20, an denen das Sitzuntergestell G beispielsweise jeweils über eine an dem Sitzuntergestell G und dem jeweiligen Lagerteil 20 angelenkte Schwinge angebracht ist, stehen hierbei aus durchgehenden, parallel zur Sitzlängsachse L verlaufenden Bodenschlitzen BS1 und BS2 hervor. Dabei können sich die Bodenschlitze BS1 und BS2 auch mit einer derartigen Länge entlang des Bodens B erstrecken, dass der Fahrzeugsitz F zwischen einer Position in der ersten Sitzreihe des Fahrzeugs und einer Position in der zweiten Sitzreihe des Fahrzeugs verfahren werden kann. Hierfür wäre dann gegebenenfalls auch jede Schiene 3 der beiden Verstelleinrichtung 1A und 1B entsprechend länger auszuführen, um eine Verstellung der Schlitten 2.1 und 2.2 zwischen den unterschiedlichen Positionen in der ersten und zweiten Sitzreihe zu ermöglichen.

Wie anhand der Verstelleinrichtung 1A der Figuren 1, 2 und 3A bis 3B dargestellt ist, verfügt jede Verstelleinrichtung 1A, 1B über eine einzelne Schiene 3, an der zwei Schlitten 2.1 und 2.2 mit jeweils eigenem elektromotorischen Antrieb 4.1 oder 4.2 verschieblich gehalten sind. Die entlang der Sitzlängsachse L hintereinander an der Schiene 3 angeordneten Schlitten 2.1 und 2.2 sind hierbei über die Antriebe 4.1 und 4.2 relativ zueinander verstellbar, sodass ein Abstand zwischen den zwei Schlitten 2.1 und 2.2 entlang der Sitzlängsachse L variabel ist, um hierüber beispielsweise eine Neigung und/oder Höhe des Sitzuntergestells G einzustellen. Die Antriebe 4.1 und 4.2 sind hierbei über eine elektronische Steuereinheit SE zu einer entsprechenden Verstellbewegung relativ zueinander ansteuerbar. Darüber hinaus ist auch eine synchrone Verstellung beider Schlitten 2.1 und 2.2 möglich, um das Sitzuntergestell G komplett entlang der Schiene 3 zu verschieben.

Beide Schlitten 2.1 und 2.2 weisen für die Anbindung des Sitzuntergestells G an die im bestimmungsgemäß entsprechend der Figur 4 montierten Zustand der Verstelleinrichtung 1A aus dem Bodenschlitz BS1 vorstehenden Lagerteilen 20 jeweils einen Gelenkpunkt/Anschraubpunkt 200 auf. Dieser Gelenkpunkt/Anschraubpunkt 200 ist für die Verbindung und gelenkige Lagerung einer Schwinge vorgesehen.

An einem Flanschabschnitt 21 des Lagerteils 20 ist ferner der Antrieb 4.1 oder 4.2 angeflanscht, sodass der jeweilige Antrieb 4.1 oder 4.2 seitlich an der Schiene 3 vorsteht und seine Antriebsachse senkrecht zur Sitzlängsachse L und damit der Längserstreckungsrichtung der Schiene 3 verläuft. An einem Außengehäuse des jeweiligen Antriebs 4.1 oder 4.2 ist eine Anschlussbuchse 40 für den Anschluss der elektronischen Steuereinheit SE zugänglich. Jeder Antrieb 4.1 oder 4.2 weist ferner eine Antriebswelle zur Drehung einer Spindelmutter 801 auf. Diese Spindelmutter 801 kämmt mit einer Spindel 7, die parallel zur Sitzlängsachse L innerhalb der Schiene 3 verläuft. Die Spindelmutter 801 ist hierbei jeweils Teil eines mit dem zugehörigen Antrieb 4.1 oder 4.2 zusammenwirkenden Verstellgetriebes 8.

Dieses Verstellgetriebe 8 umfasst jeweils ein Getriebegehäuse 80, in dem eine Antriebsschnecke 800 drehbar gelagert ist. Diese Antriebsschnecke 800 wird über den jeweiligen Antrieb 4.1 oder 4.2 angetrieben und kämmt mit einer Außenverzahnung der Spindelmutter 801. Gleichzeitig kämmt die Spindelmutter 801 über eine Innenverzahnung mit der Spindel 7, sodass ein von dem jeweiligen Antrieb 4.1 oder 4.2 aufgebrachtes Drehmoment über die Antriebsschnecke 800 in eine Drehbewegung der Spindelmutter 801 um eine Längsachse der Spindel 7 umgesetzt wird. Die Drehung der Spindelmutter 801 führt wiederum zu einer Verstellbewegung des zugehörigen Schlittens 2.1 oder 2.2 entlang der Sitzlängsachse L.

Das Getriebegehäuse 80 ist vorliegend einerseits zwischen zwei Halteplatten 81.1 und 81.2 aufgenommen und beispielsweise an diesen fixiert, gegebenenfalls durch Schweißen. Die Halteplatten 81.1 und 81.2 liegen dabei einander entlang der Sitzlängsachse L gegenüber und weisen eine Durchgangsöffnung für die sich durch die Halteplatten 81.1 und 81.2 hindurch erstreckende Spindel 7 auf. Beide Schlitten 2.1 und 2.2 sind folglich an einer gemeinsamen Spindel 7 entlang verstellbar, und zwar über ihre voneinander unabhängigen Antriebe 4.1 und 4.2 synchron in ein und dieselbe Verstelleinrichtung als auch relativ zueinander, insbesondere in unterschiedliche Verstellrichtungen.

Für die verschiebliche Lagerung an der Schiene 3 weist jeder Schlitten 2.1 oder 2.2 mehrere Stützelemente in Form von drehbar gelagerten Rollen 22, 23, 24 und 25 auf. Diese Rollen 22 bis 25 sind paarweise beidseitig des jeweiligen Verstellgetriebes 8 angeordnet. Das Verstellgetriebe 8 mit der Spindelmutter 801 befindet sich folglich zwischen zwei Paaren von je zwei drehbaren Rollen 22/25 und 23/24. Zwischen den beiden Rollen 22/25 oder 23/24 eines Paares erstreckt sich die Spindel 7 hindurch und ist durch diese oberhalb und unterhalb der Spindel 7 angeordneten Rollen 22/25 und 23/24 abgestützt. Die Rollen 22 bis 25 jedes Schlittens 2.1 oder 2.2 wirken somit - insbesondere bei einer besonders langen Spindel 7 - einer Durchbiegung der Spindel 7 entgegen.

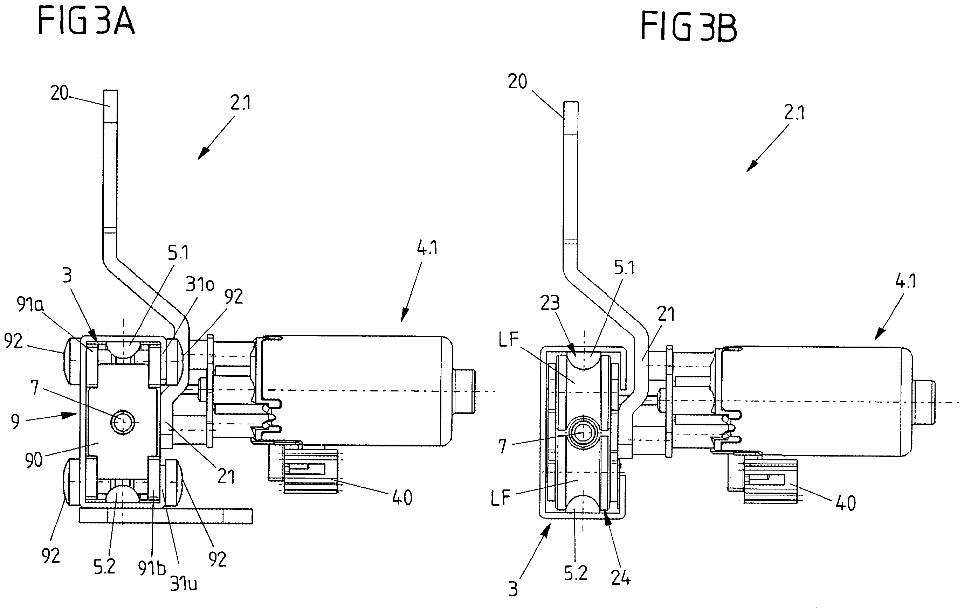

Gleichzeitig stützen sich die Rollen 22 bis 25 oberhalb (im Fall der Rollen 22 und 23) oder unterhalb (im Fall der Rollen 24 und 25) der Spindel 7 an einem fest mit der Schiene 3 verbundenen oder einstückig mit der Schiene 3 ausgebildeten Führungsprofil in Form eines Halbrundprofils 5.1 oder 5.2 ab. Hierüber stützen die Rollen 22 bis 25 Querkräfte aus dem Sitzuntergestell G ab und leiten diese in die Schiene 3 ab. Die einzelnen Rollen 22 bis 25 weisen hierbei eine konvex gewölbte Lauffläche LF (vergleiche insbesondere Figur 3B) auf, über die jede Rolle 22 bis 25 einerseits an dem jeweiligen Halbrundprofil 5.1 oder 5.2 und andererseits an der Spindel 7 abrollen kann, wenn der Schlitten 2.1 oder 2.2 entlang der Spindel 7 und damit entlang der Schiene 3 verstellt wird.

Die insgesamt vier Rollen 22 bis 25 eines Schlittens 2.1 oder 2.2 sind an zwei sich quer zur Sitzlängsachse L gegenüberliegenden Lagerplatten 60 und 61 drehbar gelagert. Diese Lagerplatten 60 und 61 bilden zusammen mit den hieran gelagerten Rollen 22 bis 25 eine Rollenbaugruppe 6 des jeweiligen Schlittens 2.1 oder 2.2. Diese Rollenbaugruppe 6 ist vollständig in einem Hohlraum 30 der Schiene 3 aufgenommen und gewährleistet die Verschieblichkeit des jeweiligen Schlittens 2.1 oder 2.2 an der Schiene 3.

Das Verstellgetriebe 8 mit der Antriebsschnecke 800 und der Spindelmutter 801 ist zwischen den Lagerplatten 60 und 61 angeordnet. Die mit dem Getriebegehäuse 80 verbundenen Halteplatten 81.1 und 81.2 können mit den seitlichen Lagerplatten 60, 61 verschweißt sein. In einer alternativen Ausführungsvariante ist kein separates Getriebegehäuse 80 für die drehbare Lagerung der Antriebschnecke 800 und die Unterbringung der Spindelmutter 801 vorgesehen. Vielmehr ist dann durch die Lagerplatten 60 und 61 sowie die Halteplatten 81.1 und 81.2 ein Gehäuse für die Antriebsschnecke 800 und die Spindelmutter 801 gebildet.

Um eine Verbindung des elektromotorischen Antriebs 4.1 oder 4.2 des jeweiligen Schlittens 2.1 oder 2.2 mit der Rollenbaugruppe 6 und dem Verstellgetriebe 8 sicherzustellen und diesen entlang der Schiene 3 verstellen zu können, ist die Schiene 3 an einer Längsseite offen ausgeführt. Diese offene Längsseite ist im bestimmungsgemäß montierten Zustand der Verstelleinrichtung innen vorgesehen und liegt damit einer Innenseite der anderen Verstelleinrichtung 1B der Schienenanordnung SA für den Fahrzeugsitz F gegenüber.

Für die Montage einer Verstelleinrichtung 1A können die einzelnen Schlitten 2.1 und 2.2 mit ihrem Lagerteil 20, dem hieran angeflanschten Antrieb 4.1 oder 4.2, dem mit dem Antrieb 4.1 oder 4.2 gekoppelten Verstellgetriebe 8 und der Rollenbaugruppe 6 vormontiert werden und eine vormontierte Baugruppe bilden. Die einzelnen Schlitten 2.1 und 2.2 werden dann von einem Ende der Schiene 3 her mit ihrer Rollenbaugruppe 6 in die Schiene 3 eingeschoben und über die mit der Spindel 7 kämmende Spindelmutter 801 bestimmungsgemäß an der Schiene 3 positioniert. Die einander gegenüberliegenden und oberhalb und unterhalb der Spindel 7 angeordneten Halbrundprofile 5.1 und 5.2 gewährleisten dabei einerseits eine definierte Führung der Schlitten 2.1 und 2.2 innerhalb der Schiene 3 wie auch eine Abstützung der durch das Sitzuntergestell G eingeleiteten Querkräfte. Gleichzeitig ist über die entlang der Sitzlängsachse L räumlich zueinander beabstandeten Rollenpaare 22/25 und 23/24, zwischen denen das Verstellgetriebe 8 eines Schlittens 2.1 oder 2.2 aufgenommen ist, eine Abstützung der Spindel 7 in einem mittleren Bereich zwischen zwei Spindelenden erreicht.

An den Enden der Schiene 3 ist jeweils ein Spindelhalter 9 vorgesehen. An diesem Spindelhalter 9 ist die feststehende Spindel gehalten und innerhalb der Schiene 3 festgelegt. Der Spindelhalter 9 weist die hierbei ein Spindelhalteteil in Form einer Schwindelhalteplatte 90 auf. Über diese Spindelhalteplatte 90 ist die Spindel 7 feststehende in der Schiene 3 gehalten und gegen ein Drehen um ihre Längsachse gesichert.

Die Spindelhalteplatte 90 ist dabei vorliegend zur einfacheren Montage und Demontage lösbar an der Schiene 3 über mehrere Befestigungselemente in Form von Schrauben 92 fixiert. Zwei Schrauben 92 sind hierbei seitlich an der Schiene 3 vorgesehen und an einer (linken) Seitenwand 32 der Schiene 3 eingedreht. Zwei weitere Schrauben 92 sind auf der anderen (rechten) Seite der Schiene 3 eingedreht, hierbei jeweils an einem oberen und unteren Randsteg 31o oder 31u, der die offene Längsseite der Schiene 3 berandet.

Über die einzelnen Schrauben 92 ist jeweils ein Arretierelement in Form eines Arretierblechs 91a oder 91b fixiert, das mit der Spindelhalteplatte 90 formschlüssig verbunden ist und dieses innerhalb der Schiene 3 in Position hält. Über die zwei einander quer zur Sitzlängsachse L gegenüberliegenden Arretierbleche 91a und 91b ist dabei die Spindelhalteplatte 90 (bei eingedrehten Schrauben 92) unbeweglich an einem Ende der Schiene 3 lösbar innerhalb der Schiene 3 fixiert.

Die in den Figuren 1, 2 und 3A dargestellte Spindelhalteplatte 90 ist dabei kreuzförmig ausgestaltet und mit ihren seitlich und nach oben sowie unten vorstehenden Abschnitten formschlüssig zwischen den sich gegenüberliegenden Arretierblechen 91a und 91b aufgenommen. Für die formschlüssige Aufnahme der seitlich vorstehenden Abschnitte der Spindelhalteplatte 90 weist jedes Arretierblech 91a, 91b eine korrespondierende Aussparung auf.

Über die Spindelhalteplatte 90 ist ein Ende der Schiene 3 vorliegend nahezu vollständig verschlossen. Dies reduziert das Risiko für in den Hohlraum 30 der Schiene 3 eindringenden Schmutz. Zudem ist das Ende der Schiene 3 über den die die Spindelhalteplatte 90 und die Arretierbleche 91a und 91b aufweisenden Spindelhalter 9 versteift. Insbesondere hierfür sind sowohl die Spindelhalteplatte 90 als auch die seitlichen Arretierbleche 91a, 91b innerhalb des Hohlraums 30 der Schiene 3 aufgenommen. Die Spindelhalteplatte 90 bildet hierbei folglich zusammen mit den Arretierblechen 91a und 91b einen Spindelhalteblock, der an die Schiene 3 geschraubt ist und das Schienenprofil versteift. Dies kann sich besonders vorteilhaft auf die Belastbarkeit der (Einzel-) Schiene 3 auswirken.

Die dargestellte Verstelleinrichtung 1A mit einer einzelnen Schiene 3 und hieran voneinander unabhängig verstellbaren und mit je einem eigenen Antrieb 4.1, 4.2 versehenen Schlitten 2.1 und 2.2 kommt ohne eine durchgehende Oberschiene aus, an der das Sitzuntergestell G an einer Sitzlängsseite festgelegt werden würde. Vielmehr ist hier eine (Sitzlängs-) Verstelleinrichtung 1A bereitgestellt, die zwei separat zueinander verstellbare Verstelleinheiten in Form der Schlitten 2.1 und 2.2 aufweist, die jeweils einen Gelenkpunkt/Anschaupunkt für das Sitzuntergestell G definieren. Eine Verstelleinrichtung 1A oder 1B ist somit ohne durchgehende Oberschiene ausgestaltet, sondern mit zwei kurzen schlittenförmigen Oberschienenstücken, die durch die Verstelleinheiten 2.1 und 2.2. definiert werden. An der einzelnen Schiene 3 können somit voneinander unabhängig ansteuerbare Schwingenantriebe für eine vordere und eine hintere Schwinge des Sitzuntergestell G vorgesehen werden, um beispielsweise - im Verbund mit einer zweiten Verstelleinrichtung 1B entsprechend der Schienenanordnung SA der Figur 4 - die Neigung und/oder die Höhe des Sitzuntergestells G bezüglich des Bodens B durch Variation eines Abstands zwischen vorderen und hinteren Schwingen zumindest mit einzustellen. Hierbei sind über die relativ zueinander verstellbaren Schlitten 2.1 und 2.2 vergleichsweise große Hübe realisierbar.

### Bezugszeichenliste

- 1A, 1B: Verstelleinrichtung
- 2.1, 2.2: Schlitten (Verstelleinheit)
- 20: Lagerteil
- 200: Gelenkpunkt / Anschraubpunkt
- 21: Flanschabschnitt
- 22, 23, 24, 25: Rolle (Stützelement)
- 3: (Einzel-) Schiene
- 30: Hohlraum
- 31o, 31u: Randsteg
- 32: Seitenwand
- 4.1, 4.2: Antrieb
- 40: Anschlussbuchse
- 5.1, 5.2: Halbrundprofil (Führungsprofil)
- 6: Rollenbaugruppe
- 60,61: Lagerplatte
- 7: Spindel
- 8: Verstellgetriebe
- 80: Getriebegehäuse
- 800: Antriebsschnecke
- 801: Spindelmutter
- 81.1,81.2: Halteplatte
- 9: Spindelhalter
- 90: Spindelhalteplatte (Spindelhalteteil)
- 91a, 91b: Arretierblech (Arretierelement)
- 92: Schraube (Befestigungselement)
- B: Boden
- BS1, BS2: Bodenschlitz
- F: Fahrzeugsitz
- G: Sitzuntergestell
- L: Sitzlängsachse
- LF: Lauffläche
- R: Rückenlehne
- SA: Schienenanordnung
- SE: Steuereinheit

## Patentansprüche

1. Fahrzeugsitz mit mindestens einer Verstelleinrichtung für die Längsverstellung des Fahrzeugsitzes (F), wobei die Verstelleinrichtung (1A, 1B) Folgendes aufweist:
- mindestens eine Schiene (3) zur Vorgabe einer Sitzlängsachse (L), entlang der ein Sitzuntergestell (G) des Fahrzeugsitzes (F) verstellbar ist, sowie zur Lagerung mindestens einer Verstelleinheit (2.1, 2.2) der Verstelleinrichtung (1A, 1B) und
- mindestens eine verschieblich geführte und mittels einer Spindel (7) und einer hiermit kämmenden Spindelmutter verstellbare Verstelleinheit (2.1, 2.2), an der das Sitzuntergestell (G) festzulegen ist, um entlang der Sitzlängsachse (L) verstellbar zu sein, und
- ein Spindelhalteteil (90), das an der Schiene (3) festgelegt ist und an dem ein Abschnitt der Spindel gehalten ist,
**dadurch gekennzeichnet, dass**
die mindestens eine Verstelleinheit (2.1, 2.2) über mindestens zwei Stützelemente (22, 25; 23, 24) an der mindestens einen Schiene (3) verschieblich gelagert ist und sich die Spindel (7) an den mindestens zwei Stützelementen (22, 25; 23, 24) abstützt und zwischen den mindestens zwei Stützelementen (22, 25; 23, 24) hindurch erstreckt.

2. Fahrzeugsitz nach Anspruch 1, **dadurch gekennzeichnet, dass** die mindestens zwei Stützelemente (22, 25; 23, 24) jeweils
(a) gleitend an der Schiene (3) anliegen und/oder
(b) drehbar gelagert sind und für ein Verschieben der Verstelleinheit (2.1, 2.2) entlang der Sitzlängsachse (L) eine Drehbewegung ausführen können.

3. Fahrzeugsitz nach Anspruch 1 oder 2, **dadurch gekennzeichnet, dass** sich die mindestens zwei Stützelemente (22, 25; 23, 24) an der Schiene (3) oder einer hiermit verbundenen Komponente (5.1, 5.2) abstützen.

4. Fahrzeugsitz nach Anspruch 3, **dadurch gekennzeichnet, dass** sich eines der mindestens zwei Stützelemente (22, 25; 23, 24) an einem konvex gewölbten Führungsprofil (5.1, 5.2) abstützt, das einstückig mit der Schiene (3) ausgebildet ist oder das als separate Komponente ausgebildet und mit der Schiene (3) verbunden ist.

5. Fahrzeugsitz nach einem der vorhergehenden Ansprüche, **dadurch gekennzeichnet, dass** mindestens zwei entlang der Sitzlängsachse (L) hintereinander angeordnete Paare von je zwei Stützelementen (22, 25; 23, 24) an einer Verstelleinheit (2.1, 2.2) vorgesehen sind und sich die Spindel (7) durch die mindestens zwei Paare (22, 25; 23, 24) hindurcherstreckt.

6. Fahrzeugsitz nach Anspruch 5, **dadurch gekennzeichnet, dass** zwischen den mindestens zwei Paaren von Stützelementen (22, 25; 23, 24) einer Verstelleinheit (2.1, 2.2) die mit der Spindel (7) kämmende Spindelmutter (801) drehbar gelagert ist.

7. Fahrzeugsitz nach einem der vorhergehenden Ansprüche, **dadurch gekennzeichnet, dass** mindestens eine Verstelleinheit (2.1, 2.2) ein Lagerteil (20) für die Verbindung mit einer Schwinge des Sitzuntergestells (G) aufweist.

8. Fahrzeugsitz nach einem der vorhergehenden Ansprüche, **dadurch gekennzeichnet, dass** eine Längsachse der Spindel (7) im Wesentlichen senkrecht zu einer Antriebsachse des Antriebs einer Verstelleinheit (2.1, 2.2) verläuft.

9. Fahrzeugsitz nach einem der vorhergehenden Ansprüche, **dadurch gekennzeichnet, dass** mindestens zwei Verstelleinheiten (2.1, 2.2) entlang der Sitzlängsachse (L) relativ zueinander verstellbar sind und jeder Verstelleinheit (2.1, 2.2) ein eigener Antrieb (4.1, 4.2) zur fremdkraftbetätigten Verstellung entlang der Sitzlängsachse (L) zugeordnet ist.

10. Fahrzeugsitz nach Anspruch 9, **dadurch gekennzeichnet, dass** die mindestens zwei Verstelleinheiten (2.1, 2.2) an ein und derselben Schiene (3) verschieblich gelagert sind.

11. Fahrzeugsitz nach Anspruch 9, **dadurch gekennzeichnet, dass** die Verstelleinrichtung (1A, 1B) eine elektronische Steuereinheit (SE) zur Steuerung der Verstellbewegungen der mindestens zwei Verstelleinheiten (2.1, 2.2) relativ zueinander aufweist.

12. Fahrzeugsitz nach einem der vorhergehenden Ansprüche, **dadurch gekennzeichnet, dass** das Spindelhalteteil (90) (a) ein Ende der Schiene (3) verschließt und/oder (b) über mindestens ein separates Befestigungselement (92) in der Schiene (3) lösbar fixiert ist.

13. Fahrzeugsitz nach einem der vorhergehenden Ansprüche, **dadurch gekennzeichnet, dass**
- die mindestens eine Schiene (3) und mindestens eine Verstelleinheit (2.1, 2.2) dazu geeignet sind, unterhalb eines Bodens (B) des Fahrzeugs angeordnet zu sein und der Boden (B) eine längserstreckte Aussparung aufweist, aus der im eingebauten Zustand lediglich ein Lagerteil (20) der Verstelleinheit (2.1, 2.2) für die Verbindung des Sitzuntergestells (G) mit der Verstelleinheit (2.1, 2.2) am Boden (B) des Fahrzeugs hervorsteht, und / oder
- der Fahrzeugsitz (F) dazu geeignet ist, mittels der mindestens einen Verstelleinrichtung (1A, 1B) entlang der Sitzlängsachse (L) zwischen einer Position in einer ersten Sitzreihe und einer Position in einer zweiten Sitzreihe des Fahrzeugs verstellbar ist, und / oder
- der Fahrzeugsitz (F) zwei Verstelleinrichtungen (1A, 1B) mit je mindestens zwei entlang der Sitzlängsachse (L) hintereinander angeordneten Verstelleinheiten (2.1, 2.2) aufweist, denen jeweils ein eigener Antrieb (4.1, 4.2) zur fremdkraftbetätigten Verstellung zugeordnet ist, und die insgesamt mindestens vier Antriebe (4.1, 4.2) der Verstelleinheiten (2.1, 2.2) paarweise und/oder einzeln ansteuerbar sind, um eine Neigung und/oder eine Höhe des Sitzuntergestells (G) oder eines hieran angeordneten Polsterträgers relativ zu einem Boden (B) eines Fahrzeugs mittels der mindestens zwei Verstelleinrichtungen (1A, 1B) einzustellen.

## Claims

1. A vehicle seat with at least one adjusting device for the longitudinal adjustment of a vehicle seat (F), wherein the adjusting device (1A, 1B) comprising the following:
- at least one rail (3) for defining a longitudinal seat axis (L) along which a seat base (G) of the vehicle seat (F) is adjustable, and for supporting at least one adjusting unit (2.1, 2.2) of the adjusting device (1A, 1B), and
- at least one shiftably guided adjusting unit (2.1, 2.2) adjustable by means of a spindle (7) and a spindle nut meshing therewith, to which the seat base (G) is to be fixed in order to be adjustable along the longitudinal seat axis (L), and
- a spindle holding member (90) which is fixed to the rail (3) and on which a portion of the spindle (7) is held,
**characterized in that**
at least one adjusting unit (2.1, 2.2) is shiftably mounted on the at least one rail (3) via at least two supporting elements (22, 25; 23, 24) and the spindle (7) is supported on the at least two supporting elements (22, 25; 23, 24) and extending through between the at least two supporting elements (22, 25; 23, 24).

2. The adjusting device according to claim 1, **characterized in that** the at least two supporting elements (22, 25; 23, 24) each
(a) slidingly rest against the rail (3) and/or
(b) are rotatably mounted and can perform a rotary movement for shifting the adjusting unit (2.1, 2.2) along the longitudinal seat axis (L).

3. The adjusting device according to claim 1 or 2, **characterized in that** the at least two supporting elements (22, 25; 23, 24) are supported on the rail (3) or a component (5.1, 5.2) connected thereto.

4. The adjusting device according to claim 3, **characterized in that** at least one of the at least two supporting elements (22, 25; 23, 24) is supported on a convexly curved guide profile (5.1, 5.2) that is integrally formed with the rail (3) or that is configured as a separate component and is connected to the rail (3).

5. The adjusting device according to any of the preceding claims, **characterized in that** at least two pairs of two supporting elements (22, 25; 23, 24) each arranged one behind the other along the longitudinal seat axis (L) are provided on an adjusting unit (2.1, 2.2) and the spindle (7) extends through the at least two pairs (22, 25; 23, 24).

6. The adjusting device according to claim 5, **characterized in that** between the at least two pairs of supporting elements (22, 25; 23, 24) of an adjusting unit (2.1, 2.2) the spindle nut (801) meshing with the spindle (7) is rotatably mounted.

7. The adjusting device according to any of the preceding claims, **characterized in that** at least one adjusting unit (2.1, 2.2) includes a bearing part (20) for connection to a rocker of the seat base (G).

8. The adjusting device according to any of the preceding claims, **characterized in that** a longitudinal axis of the spindle (7) extends substantially perpendicularly to a drive axis of the drive of an adjusting unit (2.1. 2.2).

9. The adjusting device according to any of the preceding claims, **characterized in that** at least two adjusting units (2.1, 2.2) are adjustable relative to each other along the longitudinal seat axis (L), and each adjusting unit (2.1, 2.2) is assigned a separate drive (4.1, 4.2) for the power-operated adjustment along the longitudinal seat axis (L).

10. The adjusting device according to claim 9, **characterized in that** the at least two adjusting units (2.1, 2.2) are shiftably mounted on one and the same rail (3).

11. The adjusting device according to claim 9, **characterized in that** the adjusting device (1A, 1B) includes an electronic control unit (SE) for controlling the adjusting movements of the at least two adjusting units (2.1, 2.2) relative to each other.

12. The adjusting device according to any of the preceding claims, **characterized in that** the spindle holding member (90) (a) closes an end of the rail (3) and/or (b) is releasably fixed in the rail (3) via at least one separate fastening element (92).

13. The vehicle seat according to any of the preceding claims, **characterized in that**
- the at least one rail (3) and at least one adjusting unit (2.1, 2.2) are suitable to be arranged below a floor (B) of the vehicle and the floor (B) includes a longitudinally extended cutout from which in the mounted condition merely one bearing part (20) of the adjusting unit (2.1, 2.2) protrudes for the connection of the seat base (G) to the adjusting unit (2.1, 2.2) at the floor (B) of the vehicle, and/or
- the vehicle seat (F) is suitable to be adjustable by means of the at least one adjusting device (1A, 1B) along the longitudinal seat axis (L) between a position in a first seat row and a position in a second seat row of the vehicle, and/or
- the vehicle seat (F) includes two adjusting devices (1A, 1B) each with at least two adjusting units (2.1, 2.2) arranged one behind the other along the longitudinal seat axis (L), to each of which a separate drive (4.1, 4.2) is assigned for the power-operated adjustment, and the total of at least four drives (4.1, 4.2) of the adjusting units (2.1, 2.2) are actuatable in pairs and/or individually in order to adjust an inclination and/or a height of the seat base (G) or a cushion support arranged thereon relative to a floor (B) of a vehicle by means of the at least two adjusting devices (1A, 1B).

## Revendications

1. Siège de véhicule avec au moins un dispositif d'ajustement pour l'ajustement en longueur du siège de véhicule (F), dans lequel le dispositif d'ajustement (1A, 1B) présente ce qui suit :
- au moins un rail (3) servant à spécifier un axe longitudinal de siège (L), le long duquel une sous-structure de siège (G) du siège de véhicule (F) peut être ajustée, et servant également au montage d'au moins une unité d'ajustement (2.1, 2.2) du dispositif d'ajustement (1A, 1B), et
- au moins une unité d'ajustement (2.1, 2.2) guidée de manière à pouvoir coulisser et pouvant être ajustée au moyen d'une broche (7) et d'un écrou de broche s'engrenant avec celle-ci, au niveau de laquelle la sous-structure de siège (G) est à fixer pour pouvoir être ajustée le long de l'axe longitudinal de siège (L), et
- une partie de maintien de broche (90), qui est fixée sur le rail (3) et au niveau de laquelle est maintenue une section de la broche,
**caractérisé en ce que**
l'au moins une unité d'ajustement (2.1, 2.2) est montée de manière à pouvoir coulisser au niveau de l'au moins un rail (3) par l'intermédiaire d'au moins un élément d'appui (22, 25 ; 23, 24) et la broche (7) prend appui au niveau des au moins deux éléments d'appui (22, 25 ; 23, 24) et s'étend entre les au moins deux éléments d'appui (22, 25 ; 23, 24).

2. Siège de véhicule selon la revendication 1, **caractérisé en ce que** les au moins deux éléments d'appui (22, 25 ; 23, 24) respectivement
(a) reposent de manière glissante au niveau du rail (3) et/ou
(b) sont montés de manière à pouvoir tourner et peuvent exécuter un déplacement par rotation pour un coulissement de l'unité d'ajustement (2.1, 2.2) le long de l'axe longitudinal de siège (L).

3. Siège de véhicule selon la revendication 1 ou 2, **caractérisé en ce que** les au moins deux éléments d'appui (22, 25 ; 23, 24) prennent appui au niveau du rail (3) ou d'un composant (5.1, 5.2) relié à celui-ci.

4. Siège de véhicule selon la revendication 3, **caractérisé en ce qu'**un des au moins deux éléments d'appui (22, 25 ; 23, 24) prend appui au niveau d'un profilé de guidage (5.1, 5.2) bombé de manière convexe, qui est réalisé d'un seul tenant avec le rail (3) ou qui est réalisé en tant qu'un composant séparé et est relié au rail (3).

5. Siège de véhicule selon l'une quelconque des revendications précédentes, **caractérisé en ce qu'**au moins deux paires, disposées le long de l'axe longitudinal de siège (L) l'une derrière l'autre, de respectivement deux éléments d'appui (22, 25 ; 23, 24) sont prévues au niveau d'une unité d'ajustement (2.1, 2.2) et la broche (7) s'étend à travers les au moins deux paires (22, 25 ; 23, 24) de part en part.

6. Siège de véhicule selon la revendication 5, **caractérisé en ce que** l'écrou de broche (801) s'engrenant avec la broche (7) est monté de manière à pouvoir tourner entre les au moins deux paires d'éléments d'appui (22, 25 ; 23, 24) d'une unité d'ajustement (2.1, 2.2).

7. Siège de véhicule selon l'une quelconque des revendications précédentes, **caractérisé en ce qu'**au moins une unité d'ajustement (2.1, 2.2) présente une partie de montage (20) pour la liaison à un bras oscillant de la sous-structure de siège (G).

8. Siège de véhicule selon l'une quelconque des revendications précédentes, **caractérisé en ce qu'**un axe longitudinal de la broche (7) s'étend sensiblement de manière perpendiculaire par rapport à un axe d'entraînement de l'entraînement d'une unité d'ajustement (2.1, 2.2).

9. Siège de véhicule selon l'une quelconque des revendications précédentes, **caractérisé en ce qu'**au moins deux unités d'ajustement (2.1, 2.2) peuvent être ajustées le long de l'axe longitudinal de siège (L) l'une par rapport à l'autre et un entraînement (4.1, 4.2) propre servant à l'ajustement actionné par une force extérieure le long de l'axe longitudinal de siège (L) est associé à chaque unité d'ajustement (2.1, 2.2).

10. Siège de véhicule selon la revendication 9, **caractérisé en ce que** les au moins deux unités d'ajustement (2.1, 2.2) sont montées de manière à pouvoir coulisser au niveau d'un seul et même rail (3).

11. Siège de véhicule selon la revendication 9, **caractérisé en ce que** le dispositif d'ajustement (1A, 1B) présente une unité de commande électronique (SE) servant à commander les déplacements d'ajustement des au moins deux unités d'ajustement (2.1, 2.2) l'une par rapport à l'autre.

12. Siège de véhicule selon l'une quelconque des revendications précédentes, **caractérisé en ce que** la partie de maintien de broche (90) (a) ferme une extrémité du rail (3) et/ou (b) est bloquée de manière amovible dans le rail (3) par l'intermédiaire d'au moins un élément de fixation (92) séparé.

13. Siège de véhicule selon l'une quelconque des revendications précédentes, **caractérisé en ce que**
- l'au moins un rail (3) et au moins une unité d'ajustement (2.1, 2.2) sont adaptés pour être disposés en dessous d'un plancher (B) du véhicule et le plancher (B) présente un évidement étiré en longueur, duquel seulement une partie de montage (20) de l'unité d'ajustement (2.1, 2.2) fait saillie pour la liaison de la sous-structure de siège (G) à l'unité d'ajustement (2.1, 2.2) au niveau du plancher (B) du véhicule dans l'état monté, et/ou.
- le siège de véhicule (F) est adapté pour être ajusté au moyen de l'au moins un dispositif d'ajustement (1A, 1B) le long de l'axe longitudinal de siège (L) entre une position dans une première rangée de sièges et une position dans une deuxième rangée de sièges du véhicule, et/ou
- le siège de véhicule (F) présente deux dispositifs d'ajustement (1A, 1B) avec respectivement au moins deux unités d'ajustement (2.1, 2.2) disposées l'une derrière l'autre le long de l'axe longitudinal de siège (L), auxquelles est associé respectivement un entraînement (4.1, 4.2) propre servant à l'ajustement actionné par une force extérieure, et les au total au moins quatre entraînements (4.1, 4.2) des unités d'ajustement (2.1, 2.2) peuvent être pilotés par paire et/ou individuellement pour régler une inclinaison et/ou une hauteur de la sous-structure de siège (G) ou d'un support de rembourrage disposé au niveau de celle-ci par rapport à un plancher (B) d'un véhicule au moyen des au moins deux dispositifs d'ajustement (1A, 1B).
